# EUROPEAN PATENT APPLICATION

(11) **EP 1 923 182 A2**
(43) Date of publication of application: **21.05.2008**
(21) Application number: 07120323.6
(22) Date of filing: 09.11.2007
(51) Int. Cl.: B27C 3/04, B23B 39/16

(54) **Boring unit**

(30) Priority: 14.11.2006 IT MO20060374
(71) Applicant: SCM GROUP S.p.A., 47900 Rimini (IT)
(72) Inventor: Vagnoni, Paolo, 61100, Pesaro e Urbino (PU) (IT); Ferri, Bruno, 61100, Pesaro e Urbino (PU) (IT)
(74) Representative: Crugnola, Pietro

(57) **Abstract**

A boring unit for boring pieces of wood or similar materials comprises a boring spindle shaft (2) arranged for rotatingly supporting a boring tool and mounted on bearing means (62) arranged for supporting radial thrusts.

## Description

The invention relates to boring units used in the woodworking industry for boring pieces of wood or similar materials.

In particular, the invention relates to boring units provided with boring spindle shafts axially drivable in an independent manner towards and away from such pieces.

Boring units are known provided with a plurality of spindle shafts positioned next to one another, according to a particular arrangement that depends on the type of boring that it is desired to achieve, in respective longitudinal housings obtained in a supporting head.

Each spindle shaft is provided with a first end arranged for rotatingly supporting a boring tool and with a second end, opposite the first end, rotatably supported by, and fixed through a locking screw to, a ball bearing arranged for supporting axial thrusts.

This ball bearing is mounted in a seat of a pneumatic piston controlled by a suitable command and control device and arranged for sliding axially in a liner positioned in the aforesaid housing so as to move the respective spindle shaft towards the piece when it is desired to bore the latter.

Inside the aforesaid liner there is furthermore provided a return spring positioned so as to envelop, at least partially, the spindle shaft and arranged for moving the latter away from the piece when the boring has been completed.

Each spindle shaft is further slidable in, and rotated by, a respective sleeve, which is provided in a central portion thereof with a gear.

Each of such gears is arranged for engaging at least a further corresponding gear of an adjacent spindle shaft.

Each sleeve is supported, substantially at a first and second end portion thereof, by needle bearings arranged for supporting radial engaging thrusts to which the gear is subjected during engaging with the corresponding gear of the adjacent spindle shaft.

Such radial thrusts are supported by the needle bearings and are discharged on the supporting head.

A drawback of the aforesaid boring units is the limited duration of the spindle shafts with which the boring units are provided, which involves the need to replace frequently the spindle shafts, with a consequent increase in cost.

In fact, the spindle shafts are subjected in use to strong vibrations due to the clearance between the spindle shafts and the corresponding sleeve.

Such vibrations are particularly harmful, as in addition to reducing the duration of the spindle shafts, the vibrations also cause in more serious cases the breakage of the spindle shafts due to phenomena such as wear, surface fatigue and "fretting".

A further drawback relates to the operations for assembling/disassembling these units, which operations are particularly slow and laborious.

In fact, as, for example, it is desired to remove a spindle shaft because it is damaged or for normal maintenance, from a respective piston, it is necessary to remove an upper cover, which is not easily accessible, with which the supporting head is provided, unscrew the locking screw, remove a lower cover of the supporting head and remove the boring spindle shaft from below.

A still further drawback relates to the difficulty of lubricating the needle bearings.

In fact, in order to lubricate the needle bearings it is necessary to disassembly the spindle shaft in the manner disclosed previously and grease and oil the needle bearings manually.

Another drawback relates to the limited duration of the ball bearing designed for supporting the axial thrusts to which the spindle shaft is subjected.

This is due both to the stresses to which the ball bearing is subjected due to the repeated contacts that occur, in use, between the boring tool and the surface of the piece to be bored, and to the fact that the bearing is not preloaded. In fact, as the bearing is not preloaded, it is subject to great wear, is very noisy, is less stiff and consequently guides the spindle shaft in a less precise manner.

An object of the invention is to improve the boring units for boring pieces of wood or similar materials.

A further object is to make boring units that enable the duration of the spindle shafts to be increased compared with the duration of the spindle shafts of known boring units.

A still further object is to provide boring units that are easy and fast to assemble/disassemble.

Another object is to obtain boring units in which it is possible to lubricate the needle bearings in a simple and effective manner.

Another further object is to make boring units that enable the duration of the ball bearing to be increased compared with the duration of the ball bearing of known boring units and enable the ball bearing to be preloaded.

In a first aspect of the invention, there is provided a boring unit for boring pieces of wood or similar materials comprising a boring spindle shaft for rotatingly supporting a boring tool and bearing means arranged for supporting radial thrusts, characterised in that said boring spindle shaft is mounted on said bearing means.

In a second aspect of the invention, there is provided a boring unit for boring pieces of wood or similar materials comprising a boring spindle shaft for rotatingly supporting a boring tool and bearing means arranged for supporting radial thrusts, characterised in that said boring spindle shaft is mounted on, and is slidable with respect to, rolling bodies of said bearing means.

In an embodiment of the invention, the spindle shaft is slidable in, and rotated by, gear means.

Owing to the first and to the second aspect of the invention it is possible to obtain boring units that enable the duration of the spindle shafts to be increased compared with the duration of the spindle shafts of known boring units.

In fact, the radial thrusts to which the gear means is subjected during engaging with further gear means of an adjacent spindle shaft, are discharged directly on the spindle shaft and push the latter on the bearing means on which it is mounted.

As a consequence thereof, the mounting clearances between the spindle shaft and the bearing means that are provided to enable the spindle shaft to slide axially in the bearing means are recovered in a well determined position of the bearing means, in particular in the position opposite the direction of the radial thrust acting on the spindle shaft, which is not thus subject to vibrations during operation.

Still, owing to these aspects of the invention it is possible, the radial overall dimensions of a housing arranged for receiving the spindle shaft being equal, to use shafts of greater diameter that are therefore more resistant.

In a third aspect of the invention, there is provided a boring unit for boring pieces of wood or similar materials comprising a supporting head for supporting at least one boring spindle, said supporting head being provided with a first side from which a part of the components of said at least one spindle is insertable, and a second side, opposite said first side, from which a further part of the components of said at least one spindle, is insertable, characterised in that there is provided quick locking means for connecting selected elements of said part to further selected elements of said further part.

In an embodiment of the invention the quick locking means comprises shank means obtained in an end of a spindle shaft which are arranged for being inserted by snap insertion into a conical spring mounted in piston means arranged for moving axially said spindle shafts.

Owing to this aspect of the invention it is possible to provide boring units that are easy and fast to assemble/disassemble.

In fact, if it is desired to replace a spindle shaft, it is sufficient to act on the quick locking means and remove the spindle shaft from a lower side of a housing in which it is received without the need to perform further laborious operations.

In a fourth aspect of the invention, there is provided a boring unit for boring pieces of wood or similar materials comprising a boring spindle shaft for rotatingly supporting a boring tool and bearing means for supporting radial thrusts, characterised in that there is provided lubricating means for feeding a lubricant to said bearing means.

In an embodiment there is provided external lubricating means for feeding the lubricant to the bearing means.

In a further embodiment there is provided internal lubricating means that conveys by means of a lubricating circuit the lubricant, previously used for other components of the boring unit, to the bearing means.

Owing to this aspect of the invention it is possible to obtain boring units in which lubricating the bearing means is particularly simple and effective.

In fact, lubrication is made automatically, without the need to disassemble the boring unit.

In a fifth aspect of the invention, there is provided a boring unit for boring pieces of wood or similar materials comprising a boring spindle shaft for rotatingly supporting a boring tool and moving means associated with, and arranged for moving towards said pieces, said boring spindle shaft, characterised in that there is provided shock-absorbing means interposed between said boring spindle shaft and said moving means.

In a sixth aspect of the invention, there is provided boring unit for boring pieces of wood or similar materials comprising a boring spindle shaft for rotatingly supporting a boring tool, bearing means mounted on said boring spindle shaft arranged for supporting axial thrusts and moving means for moving said boring spindle shaft towards and away from said pieces, characterised in that said moving means comprises spring means arranged for preloading said bearing means.

In an embodiment of the invention, the bearing means comprises a ball bearing.

Owing to the fifth and sixth aspect of the invention, it is possible to make boring units that enable the duration of the ball bearing to be increased compared with the duration of the ball bearing of known boring units. In fact, on the one hand the shock-absorbing means absorbs the shocks due to the repeated contacts that occur between the boring tool and a surface of the piece to be bored, and on the other hand the spring means acts on an inner ring of the ball bearing, preloading the inner ring.

This also enables the wear to be reduced to which the ball bearing is subjected, the noise to be reduced, stiffness to be increased, and the guiding precision of the spindle shaft to be increased.

The invention can be better understood and implemented with reference to the attached drawings that illustrate some embodiments thereof by way of non-limiting example, in which:
Figure 1 is a fragmentary section taken along a longitudinal plane, with some details removed to show better other details, of a boring unit;

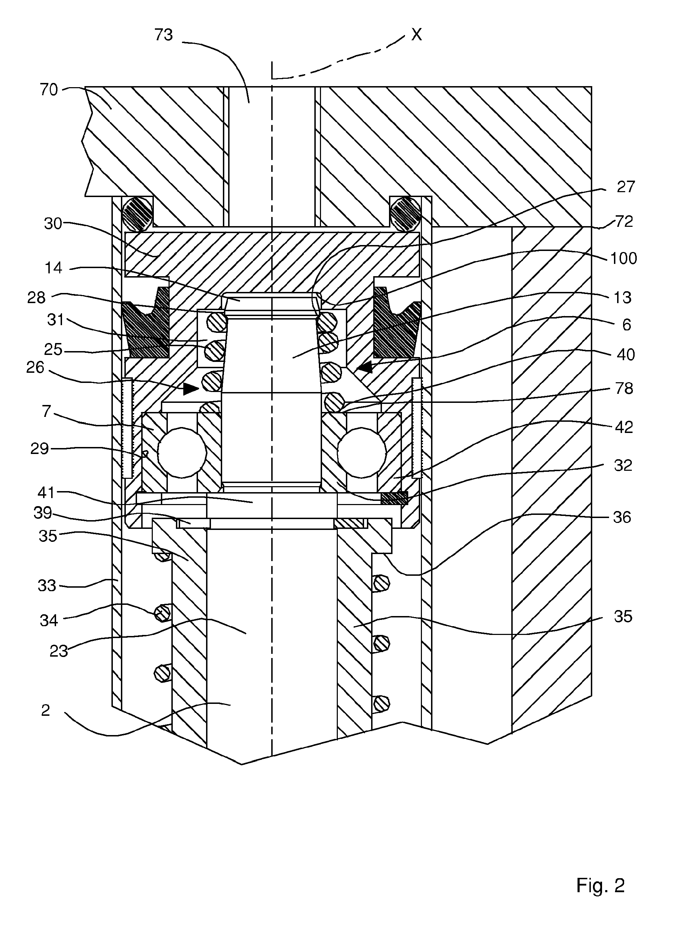

Figure 2 is an enlarged detail in Figure 1;
Figure 3 is a fragmentary section like the one in Figure 1, of an alternative embodiment of the boring unit in Figure 1;
Figure 4 is a further enlarged detail of Figure 1;
Figure 5 is a schematic view of a plurality of mutually engaging gears of respective spindle shafts included in the boring unit in Figure 1.

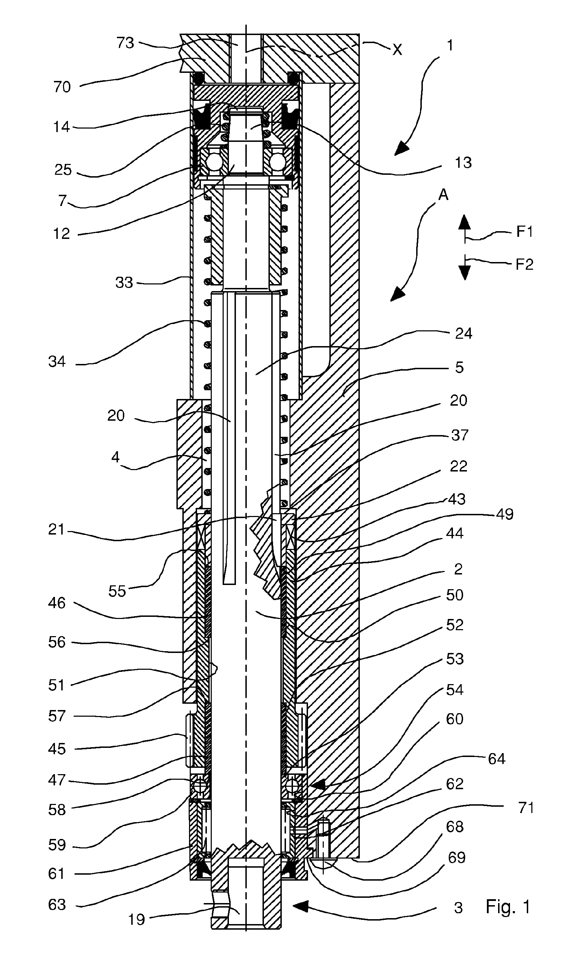

With reference to Figure 1, there is shown a boring unit 1 for boring pieces of wood or similar materials, which are not shown.

The boring unit 1 is provided with a plurality of spindle shafts 2, positioned next to one another, according to a particular arrangement that depends on the type of boring that it is desired to achieve, in respective longitudinal housings 4 obtained in a supporting head 5.

The spindle shafts 2 are arranged, as will be disclosed better below, for being driven independently towards or away from the piece to be bored and each comprises a first end portion 3, a second end portion 6, opposite the first end portion 3, and a central portion 24 interposed between the first end portion 3 and the second end portion 6.

The first end portion 3 comprises a cavity 19 arranged for receiving and rotatingly supporting a shank of a boring tool, which is not shown.

The central portion 24 is provided with a plurality of longitudinal grooves 20 arranged for engaging respective side teeth 21 of a joint 22 shaped as a sleeve and slidably mounted on the spindle shaft 2.

The second end portion 6 comprises shank means 26 arranged for being snapped into a conical spring 25 mounted in a recess 31 defined by a wall 100 of a piston body 30 arranged for moving the spindle shaft 2.

In particular, the shank means 26 comprises a first portion 12, a second portion 13 and an end portion 14, the second portion 13 being interposed between the first portion 12 and the end portion 14.

The first portion 12, having a substantially cylindrical shape, and the second portion 13, having a substantially conical shape, are arranged, in use, for supporting the conical spring 25 laterally.

On the other side, the end portion 14, also having a substantially conical shape, comprises an abutting surface 27, which is substantially circular and protruding with respect to the second portion 13 so as to act as an abutment for an end 28 of the conical spring 25.

The boring unit 1 further comprises a first bearing 7, for example a ball bearing, arranged for rotatingly supporting the spindle shaft 2 and for supporting the axial thrusts to which the latter is subjected in use.

The first bearing 7 is received in a seat 29 obtained in the piston body 30 and is mounted on a portion of the first portion 12 of the shank means 26.

In use, the conical spring 25 presses with the end 28 against the first abutting surface 27 of the end portion 14 and with a further end 40, opposite the end 28, against a resting surface 78 defined by an inner ring 32 of the first bearing 7, the resting surface 78 facing the first abutting surface 27.

In this way, the conical spring 25 is interposed between the first bearing 7 and the end portion 14 of the spindle shaft 2, so as to act as a shock absorber for the latter.

The piston body 30 is arranged for sliding axially along a liner 33 which is positioned in the housing 4 and has a substantially hollow cylindrical shape.

In particular, the piston body 30, for example comprising a pneumatic piston, is arranged for moving the spindle shaft 2 from a non-operating position A, shown in Figure 1, in which the boring tool is at a certain distance from the piece to be bored and the spindle shaft 2 is received for a prevalent portion in the housing 4, at an operating position B that is not shown, in which the boring spindle shaft 2 partially protrudes from the housing 4 and the boring tool can bore the piece.

In other words, the piston body 30 moves the spindle shaft 2 towards the piece to be bored.

The boring unit 1 further comprises a control and management device, which is not shown, arranged for independently controlling each piston body 30 to make the desired boring.

The boring unit 1 further comprises a return spring 34 arranged for moving the spindle shaft 2 from the operating position B to the non operating position A.

In other words, the return spring 34 moves the spindle shaft 2 away from the bored piece.

The return spring 34 is positioned inside the liner 33 and partially envelops the spindle shaft 2 and a centring sleeve 35 which is arranged for centring the return spring 34 and is slidably mounted in an intermediate portion 23 of the spindle shaft 2 interposed between the central portion 24 and the second end portion 6, the intermediate portion 23 having a smaller diameter than a further diameter of the central portion 24.

In this way, in use, the return spring 34 presses on one side a substantially circular second abutting surface 36, with which the centring sleeve 35 is provided and on the other a third substantially circular abutting surface 37 of the joint 22, the third abutting surface 37 facing the second abutting surface 36.

The centring sleeve 35, pushed in the direction indicated by the first arrow F1 by the return spring 34, presses in turn on an elastic ring 39 mounted between the intermediate portion 23 and the second end portion 6 of the spindle shaft 2, which elastic ring 39 pushes in the direction indicated by the first arrow F1, a circular rim 41 of the spindle shaft 2 against the inner ring 32 of the first bearing 7.

In this way, as an outer ring 42 of the first bearing 7 is fixed in the seat 29, the first bearing 7 is preloaded.

The joint 22, pushed in the direction indicated by a second arrow F2 by the return spring 34, is arranged for engaging frontal teeth 43 of a muff 44, in which the spindle shaft 2 is slidable, this muff 44 being arranged for rotating the spindle shaft 2 around an axis X thereof.

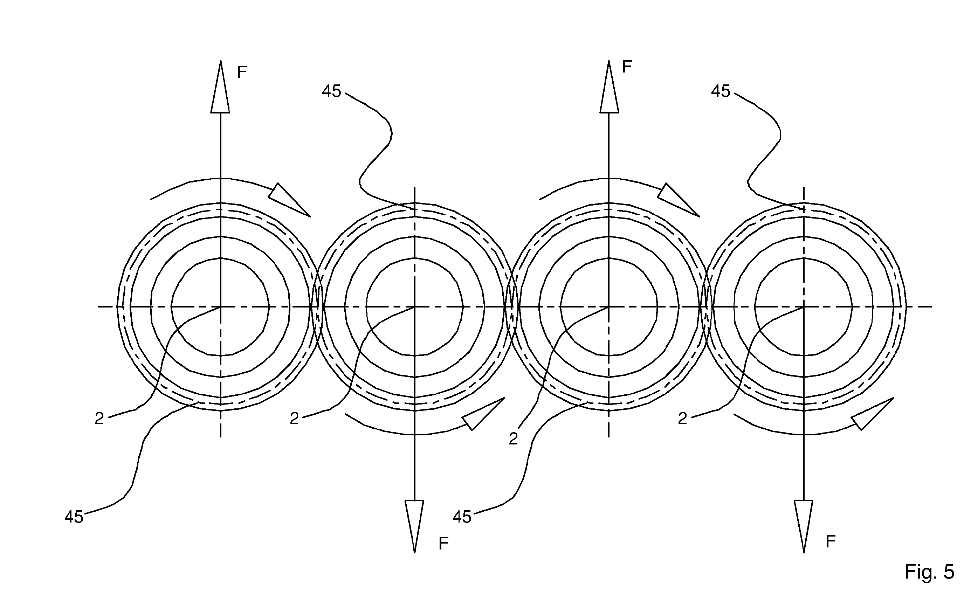

On the muff 44 there is arranged a gear 45 arranged for engaging with a corresponding gear 45 of an adjacent spindle shaft 2 (Figure 5) .

In other words, the gears 45 of the spindle shafts 2 are cascade-mounted.

The boring unit 1 further comprises a first bush 46 and a second bush 47 which are interposed between the spindle shaft 2 and the muff 44.

The first bush 46 comprises a first substantially circular active surface 55, arranged for contacting, in use, a fourth abutting surface 49, opposite the third abutting surface 37 of the joint 22, and a second active surface 56, that is substantially circular and opposite the first active surface 55, arranged for contacting, in use, a fifth abutting surface 50 obtained in an internal surface 51 of the muff 44.

The second bush 47 comprises a third substantially circular active surface 57, arranged for contacting, in use, a sixth abutting surface 52 of the muff 44 operationally positioned below the fifth abutting surface 50, and a fourth active surface 58 that is substantially circular and opposite the third active surface 57, arranged for contacting a further inner ring 53 of a second bearing 54, for example a ball bearing, arranged for supporting axial thrusts and slidably mounted on the spindle shaft 2.

The second bearing 54 is provided with a further outer ring 59 positioned in a first seat 60 of a supporting sleeve 61.

In this way, owing to the pressing action exercised by the return spring 34 in the direction of the second arrow F2 on the further inner ring 53 it is also possible to preload the second bearing 54.

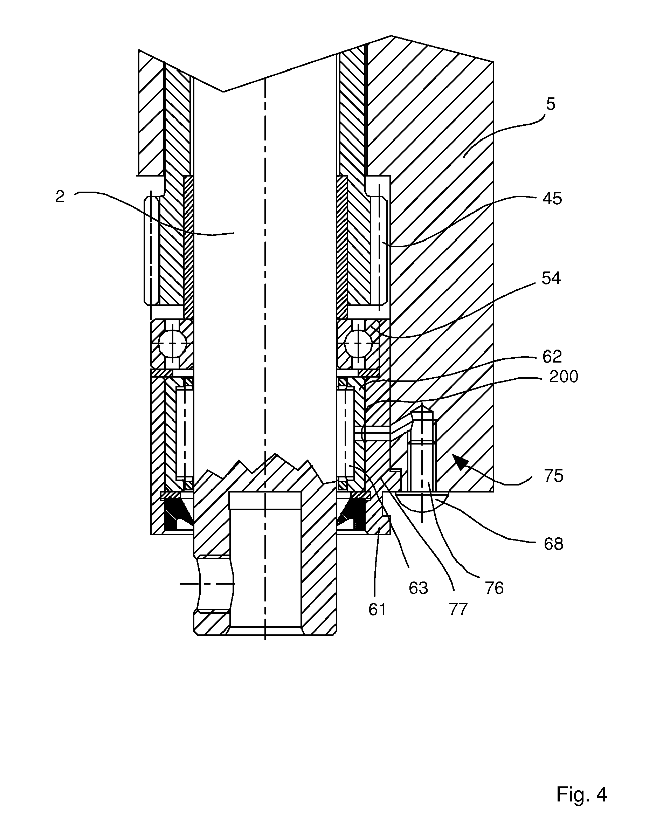

The spindle shaft 2 is further mounted on, and is slidable with respect to, rolling bodies 63 of a third bearing 62 for example a needle bearing, arranged for supporting radial thrusts F (Figure 4 and 5).

The third bearing 62 is positioned in a second seat 64 of the supporting sleeve 61, the second seat 64 being operationally positioned below the first seat 60.

In use, the radial thrusts F to which the gear 45 is subjected during engagement with a further gear 45 of an adjacent spindle shaft 2, are discharged directly on the spindle shaft 2 and push the latter on the rolling bodies 63 of the third bearing 62. Consequently, the mounting clearances between the spindle shaft 2 and the third bearing 62, provided to enable the spindle shaft 2 to slide axially in the third bearing 62, are recovered in a well determined position of the third bearing 62, in particular in the position opposite the direction of the radial thrust acting on the spindle shaft 2, which is not thus subject to vibrations during operation.

Furthermore, as the gears 45 are cascade-mounted, they will be subjected to respective radial thrusts F having the same direction but opposite sense (Figure 5).

This means that the mounting clearances of the adjacent spindle shafts 2 are recovered in opposite positions of the respective third bearings 62.

It should be noted how this enables the duration of the third bearing 62 to be increased and how, in addition, with the same overall radial dimensions of the housing 4, it is possible to use spindle shafts 2 with a greater diameter and which are therefore more resistant.

The boring unit 1 further comprises a stopping screw 68 arranged for engaging in a side 71 of the supporting head 5, facing, in use, the piece to be bored.

The stopping screw 68 contacts an abutting portion 69 of the supporting sleeve 61 so as to act as a stop for the latter and prevent the spindle shaft 2 from being extracted from below.

The boring unit 1 lastly comprises a cover 70 associated with a further side 72, opposite the side 71, of the supporting head 5.

The cover 70 is provided with a plurality of through holes 73 each arranged for enabling a controlling fluid, for example air, to enter a corresponding piston body 30.

It should be noted how the boring unit 1 enables a rapid disassembling of the spindle shaft 2 from the corresponding piston body 30.

It is in fact sufficient to unscrew the stopping screw 68 and remove in the direction indicated by the second arrow F2 the spindle shaft 2.

It should be further noted how the boring unit 1 is fast and simple to be mounted.

In fact, it is sufficient to insert from above into the housing 4 the liner 33 and the piston body 30 provided with the first bearing 7 and with the conical spring 25 and from the bottom the remaining components.

In particular it should be noted that the spindle shaft 2 is associated with the piston body 30 by inserting the shank means 26 through snap insertion into the conical spring 25.

Subsequently, the cover 70 is positioned and the stopping screw 68 is screwed.

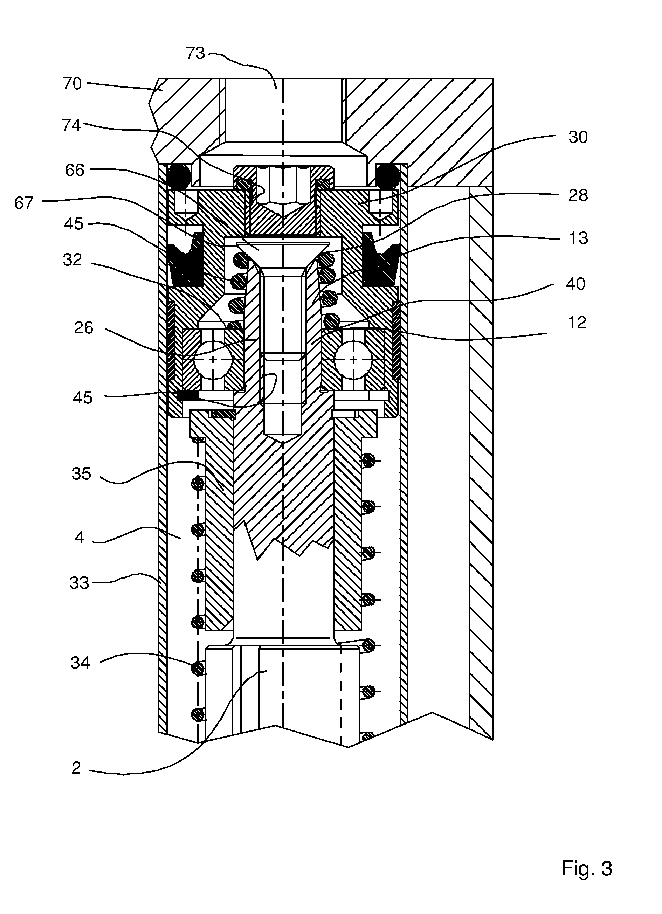

In an embodiment of the invention, illustrated in Figure 3, there is shown an alternative embodiment of the shank means 26.

In this embodiment, there is provided a threaded hole 45 obtained in the first portion 12 and in the second portion 13, arranged for engaging a screw 66, for example a countersunk screw.

In this embodiment, therefore, the conical spring 45 presses with the end 28, in use, against a countersunk surface 67 of the screw 66 and with the further end 40 presses against the inner ring 32 of the first bearing 7.

In this embodiment, furthermore, the piston body 30 comprises a passage 74, facing one of the through holes 73, in which a screwer can be inserted, for example a screwdriver, for screwing/unscrewing the screw 66 to/from the threaded hole 45.

In an embodiment of the invention shown in Figure 4, the boring unit 1 comprises lubricating means 75 arranged for feeding a lubricant to the revolving bodies 63 of the third bearing 62.

The lubricating means 75 comprises a lubricant feeding conduit 76 communicating with the revolving bodies 63 and obtained in the stopping screw 68, in a first side wall 77 of the supporting sleeve 61 and in a second side wall 200 of the third bearing 62.

The lubricating means 75 further comprises a pump that is not shown, arranged for pumping the lubricant through the feeding conduit 76.

In a further embodiment of the invention, which is not shown, the lubricating means 75 comprises internal lubricating means, which is not shown, shunting from the boring unit 1.

It should be noted how the lubrication can be achieved simply and effectively without the need to disassemble the boring unit 1.

## Claims

1. Boring unit for boring pieces of wood or similar materials comprising a boring spindle shaft (2) for rotatingly supporting a boring tool and bearing means (62) arranged for supporting radial thrusts, **characterised in that** said boring spindle shaft (2) is mounted on said bearing means (62).

2. Unit according to claim 1, wherein said bearing means (62) is mounted near a first end portion (3) of said spindle shaft (2), said first end portion (3) being arranged for supporting said boring tool.

3. Unit according to claim 1, or 2, wherein said spindle shaft (2) is slidably mounted on rolling bodies (63) of said bearing means (62).

4. Unit according to any preceding claim, wherein said bearing means (62) comprises a needle bearing.

5. Unit according to any preceding claim, and comprising a first bearing (7) arranged for rotatingly supporting said spindle shaft (2) and for supporting axial thrusts.

6. Unit according to claim 5 as appended to claim 2, or according to claim 5, as appended to claim 3, or 4, as claim 3 and claim 4 are appended to claim 2, wherein said first bearing (7) is mounted on a second end portion (6), opposite said first end portion (3), of said spindle shaft (2).

7. Unit according to claim 5, or 6, wherein said first bearing (7) is a ball bearing.

8. Unit according to any one of claims 5 to 7, wherein said first bearing (7) is received in a seat (29) obtained in moving means (30) of said unit (1), said moving means (30) being arranged for moving said spindle shaft (2) towards said pieces.

9. Unit according to claim 8, wherein said moving means comprises a pneumatic drive piston (30).

10. Unit according to claim 8, or 9, and comprising shock-absorbing means (25) interposed between said spindle shaft (2) and said moving means (30).

11. Unit according to claim 10, wherein said shock-absorbing means comprises a conical spring (25).

12. Unit according to claim 10, or 11, wherein said shock-absorbing means is obtained in a further seat (31) of said moving means (30).

13. Unit according to claim 12, wherein said further seat (31) is bounded by a wall (100) of said moving means (30) and by a surface (78) of said first bearing (7).

14. Unit according to any preceding claim, and comprising driving means (22, 44) arranged for rotating said spindle shaft (2).

15. Unit according to claim 14, wherein said driving means (22, 44) comprises contact means (47) arranged for contacting an inner ring (53) of a second bearing (54) slidably mounted on said spindle shaft (2) and arranged for supporting axial thrusts.

16. Unit according to claim 15, wherein said second bearing (54) is interposed between said driving means (22, 44) and said bearing means (62).

17. Unit according to claim 15, or 16, as claim 14 is appended to any one of claims 5 to 13, and comprising further moving means arranged for moving said spindle shaft (2) away from said pieces, said further moving means being provided with further spring means (34) arranged for preloading said first bearing (7) and said second bearing (54).

18. Unit according to claim 17, as claim 14 is appended to claim 8, wherein said further spring means (34) envelops at least partially said spindle shaft (2) and is interposed between said moving means (30) and said driving means (22, 44).

19. Unit according to any preceding claim, and comprising quick locking means (25, 26) for connecting selected elements (2) of a part (2, 22, 35, 44, 46, 47, 54, 61, 62) of the components of said boring unit (1) to further selected elements (30) of a further part (7, 25, 30, 33) of the components of said,boring unit (1).

20. Unit according to claim 19, wherein said selected elements comprise said boring spindle shaft (2).

21. Unit according to claim 19, or 20, as claim 19 is appended to claim 8, wherein said further selected elements comprise said moving means (30).

22. Unit according to any one of claims 19 to 21, wherein said quick locking means comprises snap quick locking means (25, 26).

23. Unit according to claim 22, as claim 19 is appended to claim 11, wherein said snap quick locking means (25, 26) comprises said conical spring (25).

24. Unit according to claim 22, or 23, as claim 19 is appended to claim 11, wherein said snap locking means (25, 26) comprises shank means (26) shaped so as to engage through a snap connection with said conical spring (25).

25. Unit according to claim 24, as claim 19 is appended to claim 6, wherein said shank means (26) is obtained in said second end portion (6).

26. Unit according to any preceding claim, and comprising lubricating means for feeding a lubricant to said bearing means (62).

27. Boring unit for boring pieces of wood or similar materials comprising a boring spindle shaft (2) for rotatingly supporting a boring tool and bearing means (62) arranged for supporting radial thrusts, **characterised in that** said boring spindle shaft (2) is mounted on, and is slidable with respect to, rolling bodies (63) of said bearing means (62).

28. Boring unit according to claim 27, wherein said bearing means (62) is mounted near a first end portion (3) of said spindle shaft (2) arranged for supporting said boring tool.

29. Boring unit according to claim 27, or 28, wherein said bearing means (62) comprises a needle bearing.

30. Boring unit for boring pieces of wood or similar materials comprising a supporting head (5) for supporting at least one boring spindle (2), said supporting head (5) being provided with a first side (71) from which a part (2, 22, 35, 44, 46, 47, 54, 61, 62) of the components of said at least one spindle (2) is insertable, and a second side (72), opposite said first side (71), from which a further part (7, 25, 30, 33) of the components of said at least one spindle (2), is insertable, **characterised in that** there is provided quick locking means (25, 26) for connecting selected elements (2) of said part (2, 22, 35, 44, 46, 47, 54, 61, 62) to further selected elements (30) of said further part (7, 25, 30, 33).

31. Unit according to claim 30, wherein said selected elements comprise a boring spindle shaft (2).

32. Unit according to claim 31, wherein said further selected elements comprise moving means (30) arranged for moving said spindle shaft (2) towards said pieces.

33. Boring unit according to any one of claims 30 to 32, wherein said quick locking means comprises snap quick locking means (25, 26).

34. Unit according to claim 33, wherein said snap quick locking means (25, 26) comprises conical spring means (25).

35. Unit according to claim 34, as claim 33 is appended to claim 32, wherein said conical spring means (25) is received in a seat (31) obtained in said moving means (30).

36. Unit according to claim 34, or 35, wherein said snap quick locking means (25, 26) comprises shank means (26) shaped so as to engage through a snap connection with said conical spring means (25).

37. Unit according to claim 36, wherein said shank means (26) is obtained in an end portion (6) of said spindle shaft (2) opposite a further end portion (3) of said spindle shaft (2) arranged for rotatingly supporting a boring tool.

38. Boring unit for boring pieces of wood or similar materials comprising a boring spindle shaft (2) for rotatingly supporting a boring tool and bearing means (62) for supporting radial thrusts, **characterised in that** there is provided lubricating means (75) for feeding a lubricant to said bearing means (62).

39. Unit according to claim 38, wherein said lubricating means (75) comprises external lubricating means provided with a feeding conduit (76) for feeding said lubricant communicating with said bearing means (62).

40. Unit according to claim 39, wherein said feeding conduit (76) is obtained in a fixing element (68) arranged for fixing said spindle shaft (2) in a housing (4) of a supporting head (5) arranged for supporting said spindle shaft (2).

41. Unit according to claim 39, or 40, wherein said external lubricating means comprises pump means arranged for pumping said lubricant through said feeding conduit (76).

42. Unit according to claim 38, wherein said lubricating means (75) comprises internal lubricating means shunting from said boring unit.

43. Boring unit for boring pieces of wood or similar materials comprising a boring spindle shaft (2) for rotatingly supporting a boring tool and moving means (30) associated with, and arranged for moving towards said pieces, said boring spindle shaft (2), **characterised in that** there is provided shock-absorbing means (25) interposed between said boring spindle shaft (2) and said moving means (30).

44. Boring unit according to claim 43, wherein said shock-absorbing means (25) is received in a seat (31) of said moving means (30).

45. Boring unit according to claim 44, wherein said seat (31) is bounded by a wall (100) of said moving means (30) and by a surface (78) of a first bearing (7) arranged for rotatingly supporting said spindle shaft (2) and for supporting axial thrusts.

46. Unit according to any one of claims 43 to 45, wherein said shock-absorbing means comprises a conical spring (25).

47. Boring unit for boring pieces of wood or similar materials comprising a boring spindle shaft (2) for rotatingly supporting a boring tool, bearing means (7) mounted on said boring spindle shaft (2) arranged for supporting axial thrusts and moving means (30, 34) for moving said boring spindle shaft towards and away from said pieces, **characterised in that** said moving means (30, 34) comprises spring means (34) arranged for preloading said bearing means (7).
